# EUROPÄISCHE PATENTANMELDUNG

(11) **EP 1 570 975 A2**
(43) Veröffentlichungstag der Anmeldung: **07.09.2005**
(21) Anmeldenummer: 05003982.5
(22) Anmeldetag: 24.02.2005
(51) Int. Cl.: B29C 65/18, B29C 59/02

(54) **Vorrichtung zum Verschweissen, Heissprägen oder Heisssiegeln von Kunststoffteilen**

(30) Priorität: 02.03.2004 DE 102004010022
(71) Anmelder: Climaco Formenbau GmbH, 66687 Wadern-Nunkirchen (DE)
(72) Erfinder: Neisius, Doris, 61203 Reichelsheim (DE)
(74) Vertreter: Bernhardt, Winfrid

(57) **Zusammenfassung**

Die Erfindung betrifft eine Vorrichtung zum Verschweißen, Heißprägen oder Heißsiegeln von Kunststoffteilen, insbesondere Kunststofffolien, mit einem Werkzeug (3,4), das einen zur Anlage gegen ein Kunststoffteil vorgesehenen Oberflächenabschnitt aufweist, sowie mit Einrichtungen zur impulsweisen Aufheizung der Werkzeugoberfläche in dem Oberflächenabschnitt (1 ). Gemäß der Erfindung weisen die Aufheizeinrichtungen einen nahe dem Oberflächenabschnitt angeordneten Hohlraum zur Durchströmung mit einem flüssigen Heizmedium auf. Vorzugsweise sind Einrichtungen zur aufeinanderfolgenden Durchströmung des Hohlraums (8) mit dem Heizmedium und einem Kühlmedium vorgesehen.

## Beschreibung

Die Erfindung betrifft eine Vorrichtung zum Verschweißen, Heißprägen oder Heißsiegeln von Kunststoffteilen, insbesondere Kunststofffolien, mit einem Werkzeug, das einen zur Anlage gegen ein Kunststoffteil vorgesehenen Oberflächenabschnitt aufweist, sowie mit Einrichtungen zur impulsweisen Aufheizung der Werkzeugoberfläche in dem Oberflächenabschnitt.

Durch Benutzung sind öltemperierte Werkzeuge bekannt, die auf konstanter Temperatur gehalten werden.
Eine Vorrichtung der eingangs erwähnten Art, bei der auf jeweils einen Arbeitsvorgang bezogene Aufheizungen des Werkzeugs erfolgen, gehen aus der DE 197 46 402 A1 hervor. Zur Aufheizung der Werkzeugoberfläche werden in dieser bekannten Vorrichtung Widerstandsheizdrähte oder eine Wärmestrahlung abgebende Laserlichtquelle verwendet.

Der vorliegenden Erfindung liegt die Aufgabe zugrunde, eine neue Vorrichtung der eingangs erwähnten Art zu schaffen, bei der sich gegenüber den bekannten derartigen Vorrichtungen weitere Anwendungsmöglichkeiten ergeben.

Die diese Aufgabe lösende Vorrichtung nach der Erfindung ist dadurch gekennzeichnet, dass die Einrichtungen zur impulsweisen Aufheizung der Werkzeugoberfläche einen nahe dem Oberflächenabschnitt angeordneten Hohlraum zur Durchströmung mit einem Heizmedium umfassen.

Die erfindungsgemäße Verwendung eines flüssigen Heizmediums zur dynamischen Aufheizung der Werkzeugoberfläche erlaubt es, räumlich beliebig gekrümmte Werkzeugoberflächen zur Kunststoffverarbeitung einzusetzen. Insbesondere lassen sich Werkzeugoberflächen mit unstetigem Profilverlauf gleichmäßig aufheizen.

Die Vorrichtung lässt sich insbesondere zum Verschweißen von Folien verwenden, um Folienbeutel mit Schweißnähten hoher Qualität herzustellen, wie sie z.B. zur Aufbewahrung von Arzneimittelflüssigkeiten benötigt werden.

In einer besonders bevorzugten Ausführungsform der Erfindung sind Einrichtungen zur aufeinanderfolgenden Durchströmung des Hohlraums mit dem Heizmedium und einem Kühlmedium vorgesehenen. Die z.B. während eines Schweißvorgangs einsetzende Kühlung des Werkzeugs durch das Kühlmedium sorgt für eine gewünschte schnelle Abkühlung des Materials im Bereich der Schweißnaht und verhindert ein Verkleben des Werkzeugs mit dem Kunststoffmaterial. Vorteilhaft verringert sich durch die schnelle Abkühlung die für einen Schweißzyklus benötigte Zeit.

Die genannten Einrichtungen können zur unmittelbar aufeinanderfolgenden Durchströmung mit den Medien derart vorgesehen sein, dass sich die Medien jeweils gegenseitig aus dem Hohlraum verdrängen. Der in einen Heizkreislauf eingebundene, von dem Heizmedium durchströmte Hohlraum lässt sich über ein Mehrwegventil in einen Kühlkreislauf einbinden.

Es wäre möglich, diese Einbindung stufenweise durchzuführen, so dass das durch das Kühlmedium verdrängte Heizmedium im wesentlichen noch in einen Vorratsbehälter des Heizkreislaufs gelangt.

Vorzugsweise handelt es sich bei dem Kühlmedium wie bei dem Heizmedium um eine Flüssigkeit. Insbesondere stimmen Kühlmedium und Heizmedium in ihrer stofflichen Zusammensetzung überein. Als Medien geeignet sind z.B. hochsiedende Öle. Die Viskosität dieser Öle darf sich im Bereich von 20 bis 200°C nicht zu stark ändern, so dass im Kühlkreislauf noch ein hinreichend großer Förderstrom erzeugt werden kann. Die gegenseitige Durchmischung der Medien während der Verdrängung bleibt infolge der Viskositätsunterschiede gering.

In einer besonders bevorzugten Ausführungsform ist die Aufheizung nur auf einen Teil des Oberflächenabschnitts konzentriert. Zum Beispiel beim Verschweißen von Folien wird nur ein Mittelstreifen der zur Anlage gegen die Folien kommenden Oberflächenbereiche der Werkzeuge beheizt, während die seitlichen Bereiche auf niedriger Temperatur bleiben. An den Seitenbereichen wird das Material nicht erhitzt und bietet daher für das angedrückte Werkzeug einen Widerstand, der verhindert, dass im beheizten Mittenbereich das Material zusammengepresst und unter Bildung von Randwülsten aus dem Mittenbereich herausgedrückt wird.

Vorteilhaft können Einrichtungen zur Kühlung des den aufgeheizten Abschnitt umgebenden Teils des Oberflächenabschnitts vorgesehen sein, z.B. von einem Kühlmedium durchströmte Kühlkanäle. Wärme lässt sich so gezielt in einem verhältnismäßig scharf begrenzten Bereich übertragen.

In weiterer vorteilhafter Ausgestaltung der Erfindung stehen von einem dem Oberflächenabschnitt gegenüberliegenden Wandabschnitt des Hohlraums in den Hohlraum hinein Rippen vor. Durch diese Rippen wird die Wärmeübergangsfläche zwischen dem aufzuheizenden Werkzeugbereich und dem Medium wesentlich erhöht, so dass sich eine schnellere Aufheizung des Oberflächenabschnitts erreichen lässt.

Das Werkzeug kann mehrteilig ausgebildet sein, wobei der freie Rand der von einem Werkzeugteil vorstehenden Rippen in derart geringem Abstand von einem anderen Werkzeugteil endet, dass bei Belastung des Oberflächenabschnitts die Rippen an ihrem freien Rand durch das andere Werkzeugteil abgestützt werden. Die Materialstärke zwischen dem aufzuheizenden Oberflächenabschnitt und dem gegenüberliegenden Wandschnitt kann daher gering sein, ohne dass die Gefahr einer Verformung beim Andrücken des Werkzeugs gegen ein Kunststoffteil besteht. Vorteilhaft ergibt sich eine geringe Wärmekapazität dieses Werkzeugbereichs, die schnelles Aufheizen und schnelle Abkühlung ermöglicht.

In weiterer vorteilhafter Ausgestaltung der Erfindung können der genannte Heizkreislauf und der Kühlkreislauf mit unterschiedlichem Förderdruck betreibbar sein, und es sind Einrichtungen zum Ausgleich der Füllmenge eines Vorratsbehälters im Kühlkreislauf und eines Vorratsbehälters im Heizkreislauf vorgesehen.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: ein erstes Ausführungsbeispiel für ein in einer Vorrichtung nach der Erfindung verwendetes Werkzeug in einer Querschnittsdarstellung,
- Fig. 2: eine Teildarstellung des Werkzeugs von Fig. 1 in perspektivischer Ansicht,
- Fig. 3: eine das Werkzeug von Fig. 1 und 3 verwendende Vorrichtung nach der Erfindung in schematischer Darstellung,
- Fig. 4: ein in der Vorrichtung von Fig. 4 verwendetes Mehrwegventil in verschiedenen Stellungen,
- Fig. 5: eine den Schweißvorgang mit Hilfe der Vorrichtung von Fig. 4 erläuternde Darstellung,
- Fig. 6: eine auf einem Oberflächenabschnitt des Werkzeugs von Fig. 1 und 2 erzeugbare Temperaturverteilung,
- Fig. 7 und 8: weitere Ausführungsbeispiele für ein in einer Vorrichtung nach der Erfindung verwendbares Werkzeug in geschnittener Teildarstellung.

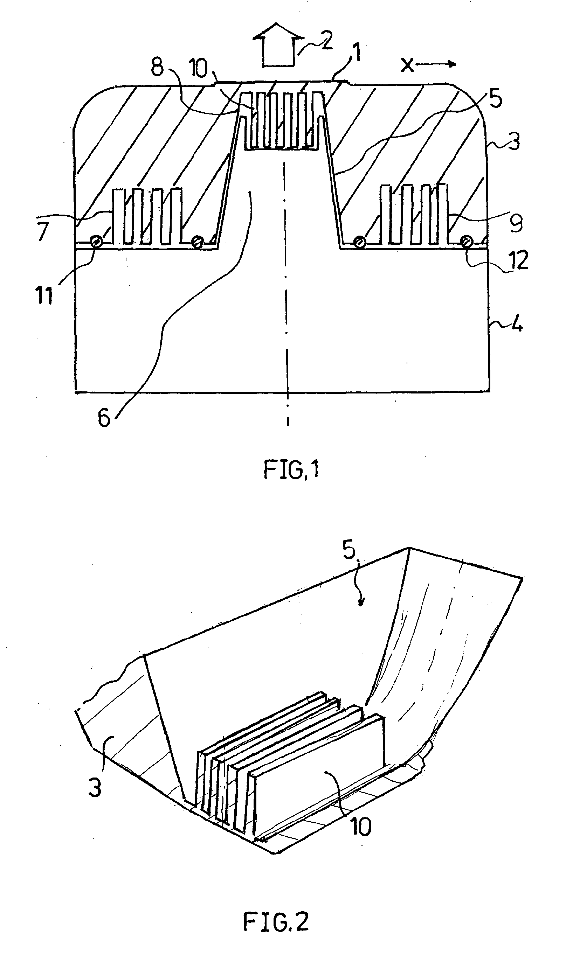

Ein in den Fig. 1 und 2 dargestelltes, zum Verschweißen von Folien vorgesehenes Werkzeug weist einen ebenen, gemäß Pfeil 2 zur Anlage gegen eine der Folien vor gesehenen Oberflächenabschnitt 1 auf. Wie Fig. 1 erkennen lässt, steht der Oberflächenabschnitt 1 vom Werkzeug geringfügig vor. Das längliche, sich in Richtung der Schweißnaht erstreckende Werkzeug ist mehrteilig mit einem Werkzeugteil 3 und einem Werkzeugteil 4 ausgebildet. Der Werkzeugteil 3 weist eine Ausnehmung 5 auf, in welchen ein Vorsprung 6 des Werkzeugteils 4 hineinragt.

Zwischen dem Werkzeugteil 3 und dem Werkzeugteil 4 sind Hohlräume 7 bis 9 in Form sich über die Länge des Werkzeugs erstreckender Kanäle gebildet. In die jeweiligen Hohlräume 7 bis 9 hinein stehen von dem Werkzeugteil 3 jeweils Rippen 10 vor, die sich über die gesamte Kanallänge erstrecken. Die freien, dem Werkzeugteil 3 abgewandten Ränder der Rippen 10 enden in geringem Abstand von dem Vorsprung 6 des Werkzeugteils 4. Die Bezugszeichen 11 und 12 weisen auf Dichtungen hin.

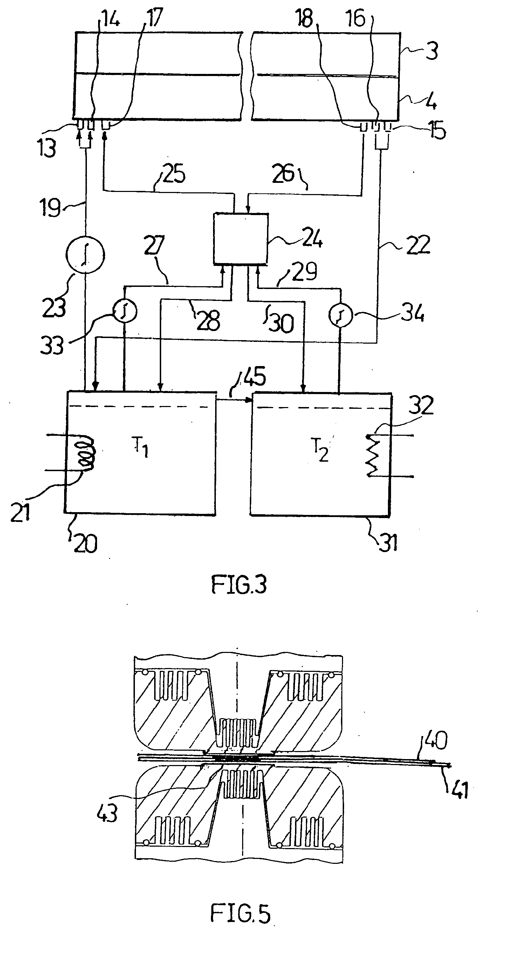

Es wird nun auf Fig. 3 Bezug genommen, in welcher das längliche Schweißwerkzeug mit den Werkzeugteilen 3 und 4 in einer Seitenansicht zu sehen ist. Das Werkzeug weist Einlässe 13 und 14 sowie Auslässe 15 und 16 auf, die mit dem Hohlraum 7 bzw. 9 verbunden sind. Ferner sind ein Einlass 17 und ein Auslass 18 für den Hohlraum 8 vorgesehen.

Die Einlässe 13 und 14 stehen über eine sich verzweigende Leitung 19 in Verbindung mit einem Vorratsbehälter 20 für ein Kühlmedium, das durch eine Kühlschlange 21 auf einer Temperatur T₁ gehalten wird, welche in dem betreffenden Ausführungsbeispiel 20°C beträgt. Mit dem Vorratsbehälter 20 sind über eine Leitung 22 auch die Auslässe 15 und 16 verbunden, so dass ein Kühlkreislauf gebildet ist, in welchem eine Förderpumpe 23 das Kühlmedium im Umlauf hält.

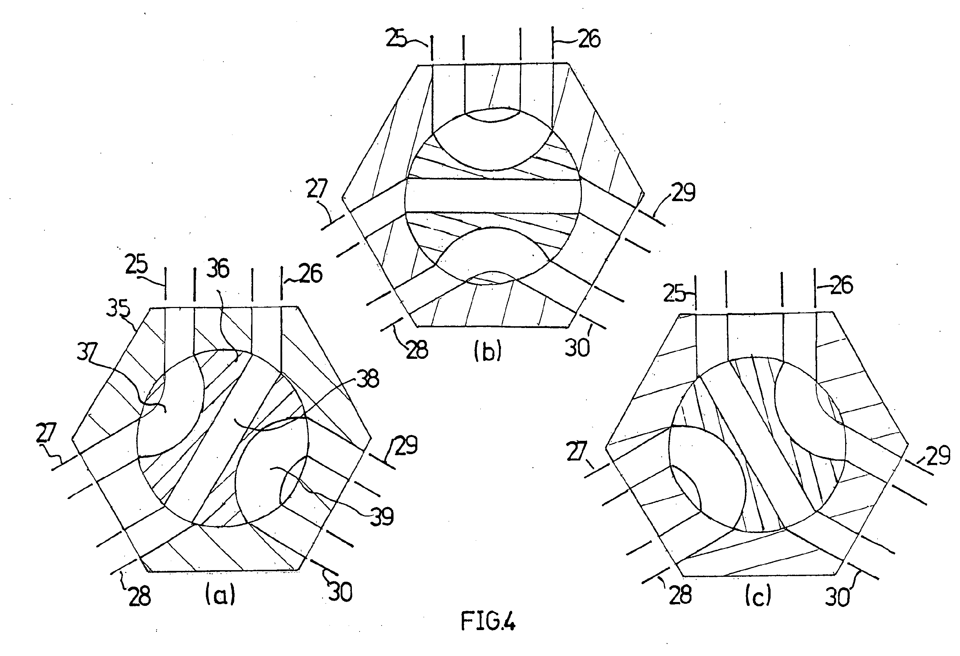

Das Bezugszeichen 24 weist auf ein in Fig. 4 gesondert dargestelltes Mehrwegventil hin, das über eine Leitung 25 mit dem Einlass 17 und über eine Leitung 26 mit dem Auslass 18 in Verbindung steht.

Das Mehrwegventil 24 ist ferner über Leitungen 27 und 28 mit dem Vorratsbehälter 20 und über Leitungen 29 und 30 mit einem Vorratsbehälter 31 für ein Heizmedium verbunden. Das Heizmedium wird durch ein Heizelement 32 auf einer Temperatur T₂ gehalten, die in dem gezeigten Ausführungsbeispiel bei 200°C liegt. In den Leitungen 27 und 29 ist jeweils eine Förderpumpe 33 bzw. 34 vorgesehen.

Heiz- und Kühlmedium stimmen in der stofflichen Zusammensetzung überein. In dem beschriebenen Ausführungsbeispiel handelt es sich bei den beiden Medien um ein hochsiedendes, bis zur maximalen Betriebstemperatur von 200°C flüssiges Öl.

Wie aus Fig. 4 hervorgeht, weist das Mehrwegventil 24 ein Gehäuse 35 und einen Drehschieber 36 mit Durchgängen 37 bis 39 auf. Durch Drehung des Drehschiebers 36 im Uhrzeigersinn lassen sich die Durchgänge 37 bis 39 derart anordnen, dass gemäß Fig. 4a die Leitungen 27 und 28 unter Bildung eines Kühlkreislaufs mit den Leitungen 25 und 26 und gemäß Fig. 4c die Leitungen 29 und 30 unter Bildung eines Heizkreislaufs mit den Leitungen 25 und 26 verbindbar sind. Im ersten Fall sind die Leitungen 29 und 30 und im zweiten Fall die Leitungen 27 und 28 kurzgeschlossen, so dass Kühlmedium bzw. Heizmedium durch die Pumpe 33 bzw. 34 im Umlauf gehalten werden kann.

Fig. 4b zeigt eine Zwischenstellung, die schnell durchfahren wird.

Über eine Verbindungsleitung 45 kann ein Füllmengenausgleich zwischen den Behältern 20 und 31 erfolgen, der notwendig ist, wenn, wie im vorliegenden Fall, im Heizkreislauf ein höherer Förderdruck als im Kühlkreislauf herrscht und über das Ventil 24 Kühlmedium in den Heizkreislauf übertritt.

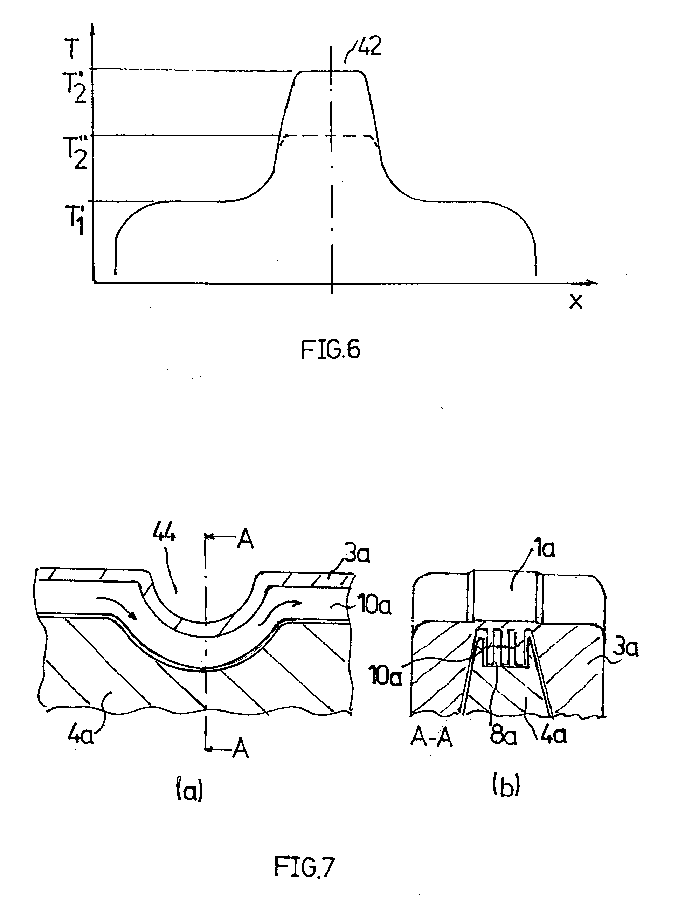

Anhand von Fig. 5 und 6 wird nun die Wirkungsweise der vorangehend beschriebenen Vorrichtung erläutert.

Um gemäß Fig. 5 Folien 40 und 41 miteinander zu verschweißen, werden zwei Werkzeuge gemäß Fig. 1 und 2 mit ihren Oberflächenabschnitten 1 einander gegenüberliegend angeordnet und unter leichtem Druck gegen die Folie 40 bzw. 41 angelegt.

Fig. 6 zeigt eine auf dem Oberflächenabschnitt 1 in Richtung X der Koordinate vor dem Schweißen herrschende Temperaturverteilung. In einem Abschnitt 42, dessen Breite etwa der Breite des Hohlraums 8 entspricht, hat sich eine Temperatur T₂' eingestellt, die etwas unterhalb der Vorlauftemperatur T₂ im Vorratsbehälter 31 liegt. Heizmedium aus dem Vorratsbehälter 31 durchströmt den Hohlraum 8.

Außerhalb des Abschnitts 42 herrscht in dem Oberflächenabschnitt 1 eine niedrigere Temperatur T₁', die etwas oberhalb der Temperatur T₁ im Vorratsbehälter 20 liegt.

Durch die erhöhte Temperatur im Abschnitt 42 kommt es bei 43 zum Fließen des Materials der Folien 40 und 41 und schließlich zu einer Verbindung der Folien. In diesem Zustand haften die Werkzeuge an der Folie 40 bzw. 41 an und lassen sich nicht ohne weiteres davon lösen. Während eines Schweißzyklus' wird daher der Drehschieber 36 des Mehrwegventils 24 in die in Fig. 4a gezeigte Stellung gedreht, wodurch der Hohlraum 8 von dem dem Vorratsbehälter 31 enthaltenden Heizkreislauf getrennt und in einen den Vorratsbehälter 20 enthaltenden Kühlkreislauf eingebunden wird. Im Abschnitt 42 kommt es nun schnell zur Abkühlung auf die Temperatur T₂'' kommt. Damit kühlen sich auch die bei 43 verschweißten Folien 40 und 41 ab und die Werkzeuge lassen sich davon lösen.

Zur Vorbereitung eines nächsten Schweißzyklus' wird der Drehschieber 36 wieder in die in Fig. 4c gezeigte Stellung gedreht. Der Hohlraum 8 ist nun wieder in den Heizkreislauf eingebunden. Es stellt sich im Bereich 42 wieder die Temperatur T₂' als Ausgangstemperatur für einen folgenden Schweißzyklus ein.

Die Temperatur T₁' bleibt während der Schweißzyklen annähernd konstant, was einerseits auf die hohe Wärmekapazität des Werkzeugteils 3 in seinen an den Hohlraum 8 grenzenden Bereichen und andererseits auf die wirksame Kühlung durch das die Hohlräume 7 und 9 durchströmende Kühlmedium aus dem Vorratsbehälter 20 zurückzuführen ist.

Es wird nun auf Fig. 7 Bezug genommen, wo gleiche oder gleichwirkende Teile mit derselben Bezugszahl wie in den vorangehenden Figuren bezeichnet sind, wobei der betreffenden Bezugszahl der Buchstabe a beigefügt ist.

Ein in Fig. 7 teilweise dargestelltes Werkzeug unterscheidet sich von dem Werkzeug gemäß Fig. 1 und 2 dadurch, dass in einen im übrigen ebenen Oberflächenabschnitt 1 a eine Vertiefung 44 mit halbkreisförmigem Querschnitt eingearbeitet ist. Dieses Werkzeug mit seinem der Werkstückkontur angepassten Oberflächenabschnitt 1 a eignet sich zur Herstellung von Folienbeuteln, wobei Folien miteinander unter Einschluss eines Anschlussschlauches und Verbindung mit dem Anschlussschlauch zu verschweißen sind. Dabei kommt der Anschlussschlauch innerhalb der Vertiefung 44 zur Anordnung.

Wie auch bei dem vorangehenden Ausführungsbeispiel sitzen bei Belastung des Werkzeugs die Rippen 10a auf dem Werkzeugteil 4a auf, so dass die verhältnismäßig dünne Materiallage zwischen dem Oberflächenabschnitt 1 a und dem Hohlraum 8a nicht deformiert wird.

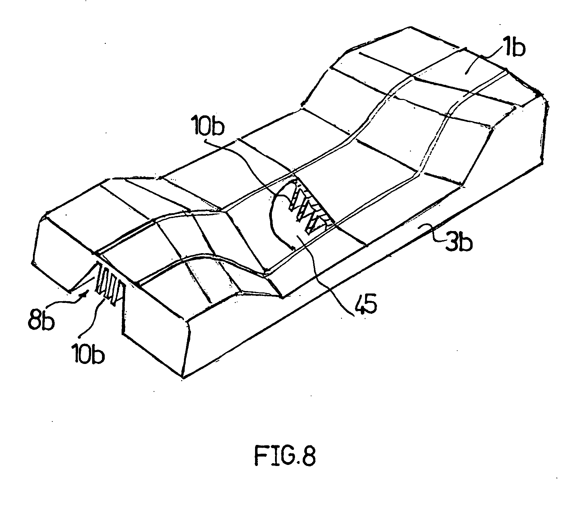

Fig. 8 zeigt einen Werkzeugteil 3b mit einem räumlich gekrümmten Oberflächenabschnitt 1 b und in einen Hohlraum 8b vorstehenden Rippen 10b. Wie ein Ausschnitt bei 45 erkennen lässt, ist der Abstand zwischen den Rippen in einem mittleren Bereich des Werkzeugteils vergrößert.

## Patentansprüche

1. Vorrichtung zum Verschweißen, Heißprägen oder Heißsiegeln von Kunststoffteilen, insbesondere Kunststofffolien (40,41), mit einem Werkzeug (3,4), das einen zur Anlage gegen ein Kunststoffteil vorgesehenen Oberflächenabschnitt (1) aufweist, sowie mit Einrichtungen zur impulsweisen Aufheizung der Werkzeugoberfläche in dem Oberflächenabschnitt (1),
**dadurch gekennzeichnet,**
**dass** die Einrichtungen zur impulsweisen Aufheizung der Werkzeugoberflächen einen nahe dem Oberflächenabschnitt (1) angeordneten Hohlraum (8) zur Durchströmung mit einem Heizmedium umfassen.

2. Vorrichtung nach Anspruch 1,
**gekennzeichnet durch** Einrichtungen zur aufeinanderfolgenden Durchströmung des Hohlraums (8) mit dem Heizmedium und einem Kühlmedium.

3. Vorrichtung nach Anspruch 2,
**dadurch gekennzeichnet,**
**dass** Einrichtungen zur unmittelbar aufeinanderfolgenden Durchströmung mit dem Heiz- und Kühlmedium derart vorgesehen sind, dass sich die Medien jeweils gegenseitig aus dem Hohlraum (8) verdrängen.

4. Vorrichtung nach Anspruch 2 oder 3,
**dadurch gekennzeichnet,**
**dass** auch das Kühlmedium eine Flüssigkeit ist.

5. Vorrichtung nach einem der Ansprüche 2 bis 4,
**dadurch gekennzeichnet,**
**dass** das Heizmedium und das Kühlmedium in ihrer stofflichen Zusammensetzung übereinstimmen.

6. Vorrichtung nach einem der Ansprüche 2 bis 5,
**dadurch gekennzeichnet,**
**dass** das Heizmedium und/oder das Kühlmedium ein hochsiedendes Öl ist.

7. Vorrichtung nach einem der Ansprüche 1 bis 6,
**dadurch gekennzeichnet,**
**dass** die Aufheizung auf einen Teil (42) des Oberflächenabschnitts (1) konzentriert ist.

8. Vorrichtung nach Anspruch 7,
**dadurch gekennzeichnet,**
**dass** Einrichtungen (7,9) zur Kühlung eines den aufgeheizten Teil (42) umgebenden Teils des Oberflächenabschnitts (1) vorgesehen sind.

9. Vorrichtung nach einem der Ansprüche 1 bis 8,
**dadurch gekennzeichnet,**
**dass** von einem dem Oberflächenabschnitt (1) gegenüberliegenden Wandabschnitt des Hohlraums (8) in den Hohlraum (8) hinein Rippen (10) vorstehen.

10. Vorrichtung nach Anspruch 9,
**dadurch gekennzeichnet,**
**dass** das Werkzeug (3,4) mehrteilig ausgebildet ist, wobei der freie Rand der von einem Werkzeugteil (3) vorstehenden Rippen (10) in derart geringem Abstand von einem anderen Werkzeugteil (4) endet, dass bei Belastung des Oberflächenabschnitts (1) die Rippen (10) an ihrem freien Rand durch das andere Werkzeugteil (4) abgestützt sind.

11. Vorrichtung nach einem der Ansprüche 1 bis 10,
**dadurch gekennzeichnet,**
**dass** ein Heizkreislauf und ein Kühlkreislauf mit unterschiedlichem Förderdruck betreibbar sind und Einrichtungen (45) zum Ausgleich des Füllstands in einem Vorratsbehälter (20) des Kühlkreislaufs und einem Vorratsbehälter (31) des Heizkreislaufs bestehen.
